# EUROPEAN PATENT APPLICATION

(11) **EP 4 672 030 A1**
(43) Date of publication of application: **31.12.2025**
(21) Application number: 25183044.4
(22) Date of filing: 16.06.2025
(51) Int. Cl.: G06F 16/538

(54) **INFORMATION PROCESSING APPARATUS, PROGRAM, AND INFORMATION PROCESSING METHOD**

(30) Priority: 24.06.2024 JP 2024101543
(71) Applicant: CANON KABUSHIKI KAISHA, Tokyo 146-8501 (JP)
(72) Inventor: ACHIWA, Ken, Tokyo, 146-8501 (JP); ITO, Naoki, Tokyo, 146-8501 (JP)
(74) Representative: Canon Europe Limited

(57) **Abstract**

An image processing apparatus includes a receiving unit configured to receive selection of a button from a user, an acquisition unit configured to acquire image data by reading an original document according to reception of the selection by the receiving unit, and a transmission unit configured to transmit an instruction sentence registered in association with the button by the user and to be used for processing that is performed using the image data by an artificial intelligence (AI) service and the image data to the AI service.

## Description

### BACKGROUND

### Field of the Invention

The present invention relates to an information processing apparatus, a program, and an information processing method.

### Description of the Related Art

In recent years, generative artificial intelligence (AI) capable of automatically generating creative contents such as images, text, and sounds have rapidly become prevalent. Accordingly, various services (AI services) that use generative AI are provided. The publication of Japanese Patent No. 7398723 discusses an image generation apparatus that creates an instruction sentence including text corresponding to a tag selected by a user, inputs the instruction sentence to generative AI, and outputs an image generated using the generative AI.

There is a case where an AI service is caused to process an image obtained by scanning an original document, or output a new image based on an image obtained by scanning an original document. Specifically, for example, there is a case where an image obtained by scanning an original document and an instruction sentence are transmitted to the AI service, and the AI service is caused to execute the process of summarizing text included in the image. For example, the instruction sentence for causing the AI service to execute the process of summarizing the text in the image may be "summarize content described in image within 400 characters". If the AI service is caused to perform the summarization process on each of 10 images, the image to be transmitted changes each time, but the instruction sentence does not change.

However, conventionally, even in a case where an AI service is caused to perform the same processing, a user needs to input an instruction sentence each time, which is troublesome.

### SUMMARY

According to a first aspect of the present invention, there is provided an image processing apparatus as specified in claims 1 to 18. According to a second aspect of the present invention, there is provided a program as specified in claim 19. According to a third aspect of the present invention, there is provided an image processing method as specified in claim 20.

Further features of the present invention will become apparent from the following description of exemplary embodiments with reference to the attached drawings.

### BRIEF DESCRIPTION OF THE DRAWINGS

Fig. 1 is a diagram illustrating an example of a configuration of an information processing system according to a first exemplary embodiment.
Figs. 2A to 2C are diagrams illustrating examples of hardware configurations of apparatuses included in the information processing system.
Figs. 3A and 3B are sequence diagrams illustrating processing performed by the information processing system.
Fig. 4 is a flowchart in which a one-touch button corresponding to a scan extension function is registered.
Fig. 5 is a flowchart illustrating an example of processing in which a document image is processed.
Fig. 6 is a sequence diagram illustrating processing performed by an information processing system according to a second exemplary embodiment.
Fig. 7 is a sequence diagram illustrating processing performed by an information processing system according to a third exemplary embodiment.
Fig. 8 is a flowchart illustrating an example of a process of issuing a notification of an error in an instruction sentence according to the second exemplary embodiment.
Fig. 9 is a flowchart illustrating an example of control of a setting of an instruction sentence according to the third exemplary embodiment.
Figs. 10A and 10B are diagrams illustrating examples of setting screens for setting a scan extension function.
Figs. 11A to 11C are diagrams illustrating examples of a data flow in which a document image is processed and screens.
Fig. 12 is a flowchart illustrating an example of control of a setting of an instruction sentence according to a fourth exemplary embodiment.

### DESCRIPTION OF THE EMBODIMENTS

Exemplary embodiments for carrying out the present invention will be described with reference to the drawings. The components described in the exemplary embodiments are merely illustrative, and do not limit the technical scope of the present invention. For example, the components constituting the present invention can be replaced with any components capable of exerting similar functions. Any component may be added.

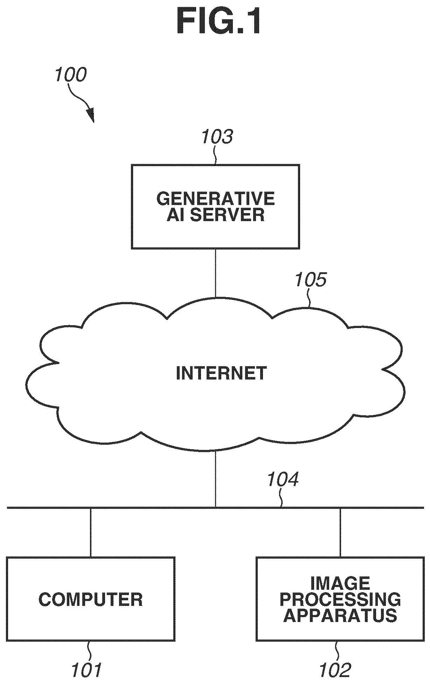

A first exemplary embodiment is described. Fig. 1 is a block diagram illustrating an example of the network configuration of an information processing system 100 according to the present invention.

As illustrated in Fig. 1, the information processing system 100 includes a computer 101 that is a terminal apparatus, an image processing apparatus 102 configured to read an original document such as paper, and a generative artificial intelligence (AI) server 103. For example, the computer 101 and the image processing apparatus 102 are placed in an office and connected together via a company network 104 so that the computer 101 and the image processing apparatus 102 can communicate with each other. The company network 104 is connected to the Internet 105 outside the office via a router (not illustrated).

The generative AI server 103 is connected to the computer 101 and the image processing apparatus 102 via the Internet 105 and the company network 104 so that the generative AI server 103 can communicate with the computer 101 and the image processing apparatus 102. The generative AI server 103 is a server managed by a provider that provides an AI service, and the AI service is provided by the generative AI server 103.

The generative AI server 103 may be able to be used by combining a plugin that achieves an additional function developed by a provider that provides an AI service utilizing a generative AI service. The company network 104 may use a wired connection, or may use a wireless connection. In the information processing system 100, a configuration may be employed in which the generative AI server 103 is also placed in the office, and the computer 101 and the image processing apparatus 102 are connected to the generative AI server 103 via the company network 104 so that the computer 101 and the image processing apparatus 102 can communicate with the generative AI server 103.

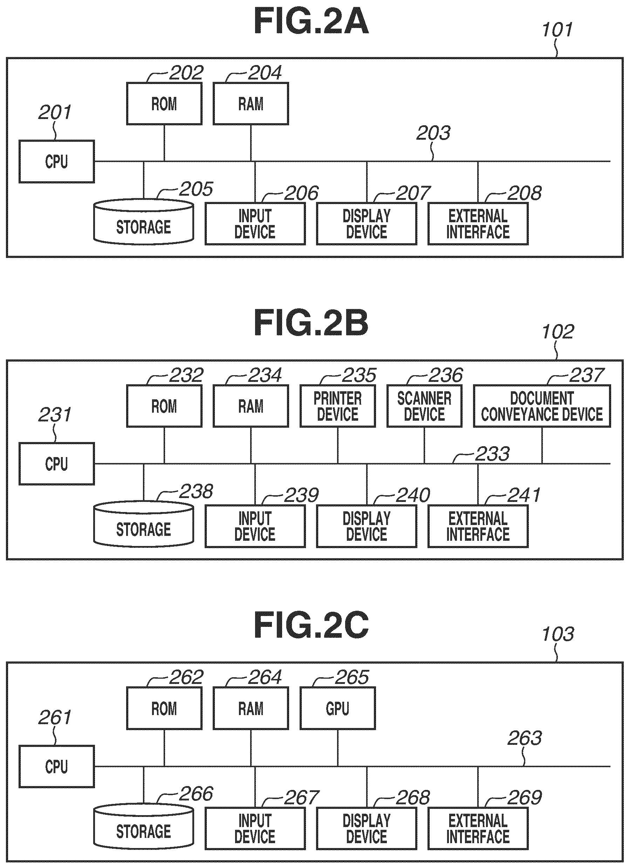

Figs. 2A to 2C are diagrams illustrating examples of the hardware configurations of the computer 101, the image processing apparatus 102, and the generative AI server 103, respectively, included in the information processing system 100.

Fig. 2A is a diagram illustrating an example of the hardware configuration of the computer 101. The computer 101 includes a central processing unit (CPU) 201, a read-only memory (ROM) 202, a random-access memory (RAM) 204, and storage 205. The computer 101 further includes an input device 206, a display device 207, and an external interface 208. These components are connected together via a data bus 203 so that the components can communicate with each other.

The CPU 201 is a control unit that controls the entirety of the operation of the computer 101. The CPU 201 executes a startup program stored in the ROM 202, thereby starting up the system of the computer 101. The CPU 201 executes a control program stored in the storage 205, thereby achieving various functions such as the display of a document image and the input of an instruction to generative AI.

The ROM 202 is a storage unit such as a non-volatile memory and stores the startup program for starting up the computer 101. The data bus 203 is a communication unit for the devices included in the computer 101 to transmit and receive data to and from each other. The RAM 204 is a storage unit such as a volatile memory and is used as a work memory when the CPU 201 executes the control program. The storage 205 is a storage unit such as a hard disk drive (HDD) and stores various pieces of information regarding the control program and image data of a document image.

The input device 206 is an operation unit such as a mouse and a keyboard and receives an operation input provided by a user who operates the computer 101. The display device 207 is a display unit such as a liquid crystal display and displays a setting screen for the image processing apparatus 102 or an input screen for the generative AI server 103 to the user. The external interface 208 is an interface that connects the computer 101 and the network 104. The external interface 208 receives image data of a document image from the image processing apparatus 102 or transmits an instruction sentence (a prompt) to the generative AI server 103.

Fig. 2B is a diagram illustrating an example of the hardware configuration of the image processing apparatus 102. The image processing apparatus 102 has a reading function. For example, a scanner, a multifunction printer/peripheral (MFP), an image forming apparatus, or an image processing apparatus can be used. The image processing apparatus 102 includes a CPU 231, a ROM 232, a RAM 234, a printer device 235, a scanner device 236, a document conveyance device 237, storage 238, an input device 239, a display device 240, and an external interface 241. These components are connected together via a data bus 233 so that the components can communicate with each other.

The CPU 231 is a control unit that controls the entirety of the operation of the image processing apparatus 102. The CPU 231 executes a startup program stored in the ROM 232, thereby starting up the system of the image processing apparatus 102. The CPU 231 executes a control program stored in the storage 238, thereby achieving a scan function, a print function, and a fax function of the image processing apparatus 102. The ROM 232 is a storage unit such as a non-volatile memory and stores the startup program for starting up the image processing apparatus 102. The data bus 233 is a communication unit for the devices included in the image processing apparatus 102 to transmit and receive data to and from each other. The RAM 234 is a storage unit such as a volatile memory and is used as a work memory when the CPU 231 executes the control program.

The printer device 235 is an image output device. The printer device 235 prints a document image on a recording medium such as paper and outputs the recording medium.

The scanner device 236 is an image input device. The scanner device 236 optically reads a recording medium (an original document) such as paper on which a character or a chart is printed. Data (image data) obtained by the scanner device 236 reading the original document is acquired as a document image.

The document conveyance device 237 is achieved by an automatic document feeder (ADF). The document conveyance device 237 detects original documents placed on a document platen and conveys the detected original documents one by one to the scanner device 236.

The storage 238 is a storage unit such as an HDD and stores the control program and image data.

The input device 239 is an operation unit such as a touch panel and a hardware key and receives an operation input provided by a user who uses the image processing apparatus 102.

The display device 240 is a display unit such as a liquid crystal display and outputs the display of a setting screen for the image processing apparatus 102 to the user.

The external interface 241 is an interface that connects the image processing apparatus 102 and the network 104. The external interface 241 transmits image data to the computer 101 or transmits image data and an instruction sentence (a prompt) to the generative AI server 103.

Fig. 2C is a diagram illustrating the hardware configuration of the generative AI server 103. The generative AI server 103 includes a CPU 261, a ROM 262, a RAM 264, and a graphics processing unit (GPU) 265. The generative AI server 103 further includes storage 266, an input device 267, a display device 268, and an external interface 269. These components are connected together via a data bus 263 so that the components can communicate with each other.

The CPU 261 is a control unit that controls the entirety of the operation of the generative AI server 103. The CPU 261 executes a startup program stored in the ROM 262, thereby starting up the system of the generative AI server 103. The CPU 261 executes a control program stored in the storage 266. Using a large language model (LLM) capable of inputting multimodal data of at least an image and text, the executed control program outputs the result of converting multimodal data according to an instruction sentence given in text.

The ROM 262 is a storage unit such as a non-volatile memory and stores the startup program for starting up the generative AI server 103.

The data bus 263 is a communication unit for the devices included in the generative AI server 103 to transmit and receive data to and from each other.

The RAM 264 is a storage unit such as a volatile memory and is used as a work memory when the CPU 261 executes the control program.

The GPU 265 is a calculation unit composed of an image processing processor. For example, according to a control command given by the CPU 261, the GPU 265 executes calculation for converting input data of an image and text using the LLM.

The storage 266 is a storage unit such as an HDD and stores various pieces of information regarding the control program, the large language model, image data, and an instruction sentence (a prompt).

The input device 267 is an operation unit such as a mouse and a keyboard and receives an operation input provided to the generative AI server 103 by a user who uses the generative AI server 103.

The display device 268 is a display unit such as a liquid crystal display and outputs the display of a setting screen for the generative AI server 103 to the user who uses the generative AI server 103.

The external interface 269 is an interface that connects the generative AI server 103 and the network 104 so that the generative AI server 103 and devices connected to the network 104 can communicate with each other. The external interface 269 receives image data and an instruction sentence from the image processing apparatus 102 or transmits the output result of the LLM to the computer 101.

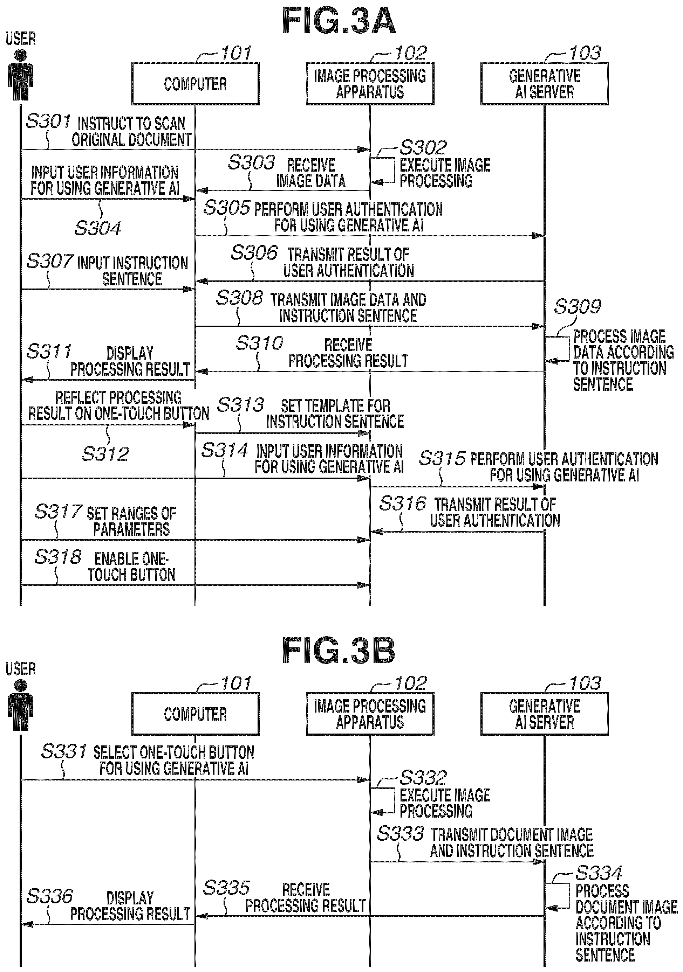

Figs. 3A and 3B are diagrams illustrating the sequences of processing performed by the information processing system 100. A sign "S" in the description of each process means "step" in the sequence. The same applies to the following flowcharts and sequence diagrams. For convenience of description, operations of a user are also described using steps.

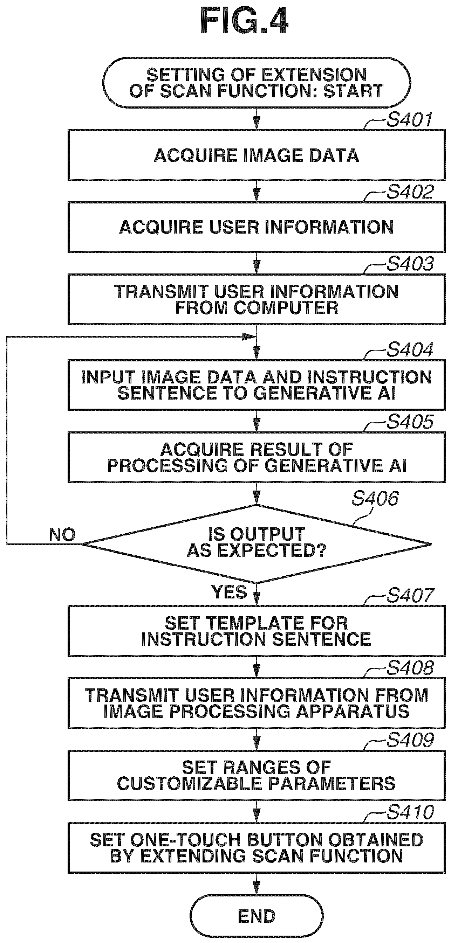

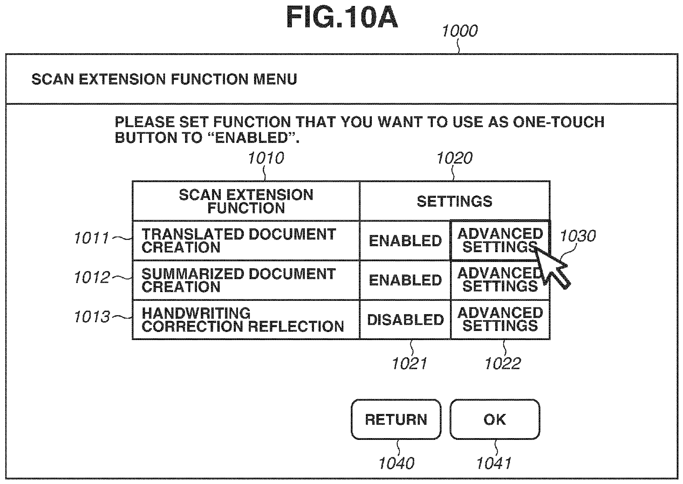

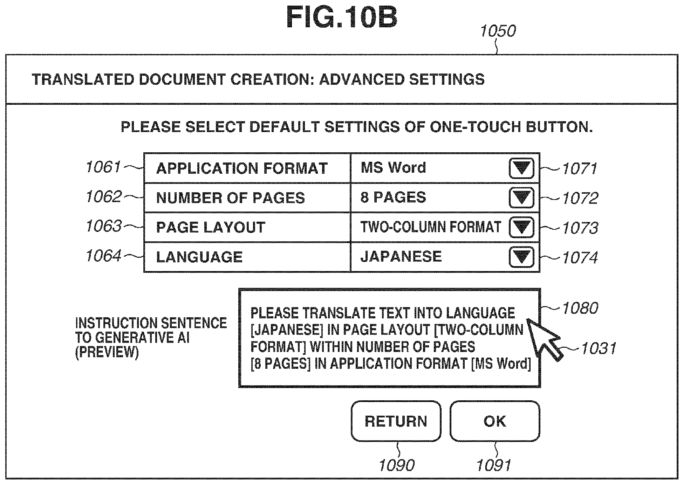

Fig. 3A is a diagram illustrating the flow in which a one-touch button corresponding to a scan extension function is registered. This processing is started according to the state where the user starts a one-touch button registration mode by pressing a button (not illustrated). A method for the computer 101 to make a setting to extend the scan function of the image processing apparatus 102 in Fig. 3A will be described below with reference to Fig. 4. An operation input on a setting screen related to the enabling of a one-touch button in steps S315 to S317 will be described below with reference to Figs. 10A and 10B.

In step S301, the user who uses the information processing system 100 places an original document such as paper in the document conveyance device 237 of the image processing apparatus 102 and presses a scanning execution button using the input device 239, thereby giving an instruction to scan the original document.

In step S302, the CPU 231 of the image processing apparatus 102 controls the scanner device 236 to read the original document placed in the document conveyance device 237 by the user in step S301, thereby acquiring image data of a document image based on the original document. The CPU 231 executes image processing such as an optical character recognition (OCR) process and handwriting detection on the acquired image data. "OCR" refers to an optical character recognition function for extracting text data from a portion that can be recognized as text and creating Portable Document Format (PDF) data, Extensible Markup Language (XML) Paper Specification (XPS) data, or Office Open XML (OOXML) data in which the text can be searched.

In step S303, the CPU 231 of the image processing apparatus 102 controls the external interface 241 to transmit the image data of the document image acquired in step S302 to the computer 101.

The computer 101 receives the image data of the document image and holds the image data of the document image as data that can be used by the user in subsequent steps in the storage 205.

In step S304, if the computer 101 receives the image data of the document image, the CPU 201 displays a screen (not illustrated) for the user to input user information on the display device 207. The user inputs user information for using an AI service provided by the generative AI server 103 to the screen displayed on the display device 207. The user information is used to control access to a log that records input/output data when the AI service provided by the generative AI server 103 is used, or control charging according to the usage of the generative AI server 103 by the user.

In step S305, the CPU 201 of the computer 101 controls the external interface 208 to transmit the user information input by the user in step S304 to the generative AI server 103. The generative AI server 103 receives the user information. Based on the user information received from the computer 101, the CPU 261 of the generative AI server 103 performs user authentication for using the AI service provided by the generative AI server 103.

In step S306, the CPU 261 of the generative AI server 103 controls the external interface 269 to transmit the result of the user authentication performed in step S305 to the computer 101. Subsequent steps are described on the premise that the user authentication performed by the generative AI server 103 is completed.

In step S307, if the computer 101 receives the result of the user authentication from the generative AI server 103, the CPU 201 displays a screen (not illustrated) for the user to input an instruction sentence (a prompt) on the display device 207. The user inputs to the screen displayed on the display device 207 an instruction sentence (a prompt) for indicating a content that the user wishes to output using the AI service to the image data acquired by the image processing apparatus 102 in step S302. That is, the CPU 201 receives the instruction sentence from the user.

In step S308, the CPU 201 of the computer 101 controls the external interface 208 to transmit the image data received from the image processing apparatus 102 in step S303 and the instruction sentence (the prompt) input by the user in step S307 to the generative AI server 103. The generative AI server 103 receives the image data and the instruction sentence (the prompt). "The instruction sentence (the prompt)" refers to a character string that defines conditions for processing that the generative AI server 103 is to be caused to execute.

In step S309, the CPU 261 of the generative AI server 103 controls the components to process the image data according to the instruction sentence (the prompt) received by the computer 101 in step S308.

In step S310, the CPU 261 of the generative AI server 103 controls the external interface 269 to transmit the result of the processing (the output result) performed in step S309 to the computer 101. The computer 101 receives the result of the processing (the output result).

In step S311, the CPU 201 of the computer 101 displays the result of the processing received from the generative AI server 103 in step S310 on the display device 207. The user confirms the output result displayed on the display device 207 and confirms that a desired output result is obtained in response to the content indicated in step S307. If the output result desired by the user is not obtained, the user appropriately changes the content of the instruction sentence (the prompt) input in step S307. Then, steps S307 to S311 are repeated until the desired output result is obtained.

In step S312, the user instructs the computer 101 to reflect the output result on a one-touch button (described below in Fig. 4).

In step S313, according to the instruction given by the user in step S312, the CPU 201 of the computer 101 controls the external interface 208 to transmit the instruction sentence (the prompt) input by the user in step S307 to the image processing apparatus 102. The image processing apparatus 102 receives the instruction sentence (the prompt). The CPU 231 saves the instruction sentence (the prompt) as a template for the instruction sentence (the prompt) to be used as the one-touch button in the storage 238. That is, the CPU 231 registers the instruction sentence (the prompt) input to an "instruction sentence to generative AI" display frame 1080 by the user in step S307 as a template for the instruction sentence.

In step S314, the user inputs user information for using the AI service provided by the generative AI server 103 through the image processing apparatus 102, and the CPU 231 of the image processing apparatus 102 receives the user information. By using common user information in the user authentication in step S304 and the user authentication in step S314, the computer 101 and the image processing apparatus 102 can use the AI service provided by the generative AI server 103 in common. Consequently, for example, even in a case where the image processing apparatus 102 transmits an instruction sentence (a prompt) and image data to the generative AI server 103, the output results of the instruction sentence (the prompt) and the image data can be used through the computer 101. For example, the user information is used to control access to a log that records input/output data when the AI service provided by the generative AI server 103 is used, or control charging according to the usage of the generative AI server 103 by the user.

In step S315, the CPU 231 of the image processing apparatus 102 controls the external interface 241 to transmit the user information input by the user in step S314 to the generative AI server 103. The generative AI server 103 receives the user information. Based on the user information received from the image processing apparatus 102, the CPU 261 of the generative AI server 103 performs user authentication for using the AI service provided by the generative AI server 103 through the image processing apparatus 102.

In step S316, the CPU 261 of the generative AI server 103 controls the external interface 269 to transmit the result of the user authentication performed in step S315 to the image processing apparatus 102.

In step S317, the user sets parameters customizable in the instruction sentence to be used in the one-touch button for using the AI service provided by the generative AI server 103 through the image processing apparatus 102. Specifically, the user sets parameters 1061 to 1064 illustrated in Fig. 10B in the instruction sentence (the prompt) input in step S307.

In step S318, the user enables the one-touch button for using the AI service provided by the generative AI server 103 through the image processing apparatus 102. Specifically, the user selects "enabled" in an enabling setting 1021 corresponding to a scan extension function 1010 illustrated in Fig. 10A.

Setting information regarding settings enabled as the one-touch button after the user authentication in steps S314 to S318 is stored as information associated with the user in the storage 238 of the image processing apparatus 102. Specifically, the user information for using the AI service and the parameters 1061 to 1064 (an application format, the number of pages, a page layout, and a language) in default settings to be used when the scan extension function 1010 is used in the one-touch button are stored in association with each other. That is, a one-touch button corresponding to a scan extension function is registered.

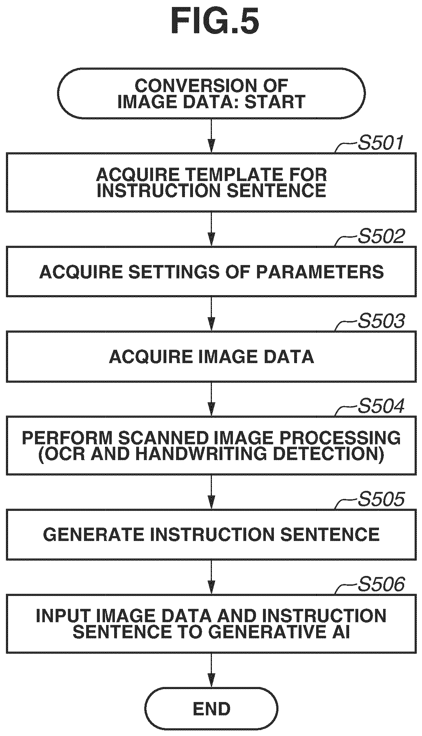

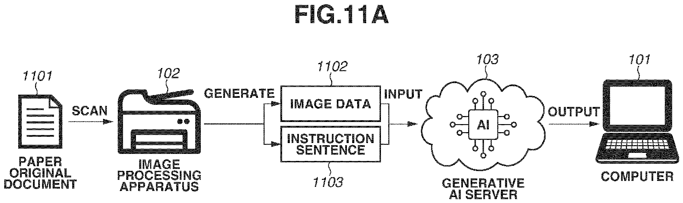

Fig. 3B is a diagram illustrating the flow in which scanning is executed and acquired image data is processed using the one-touch button registered in Fig. 3A. A method for processing image data using the AI service provided by the generative AI server 103 through the image processing apparatus 102 will be described below with reference to Fig. 5. An operation input on an input screen related to an input to and an output from the generative AI server 103 will be described below with reference to Figs. 11A to 11C.

In step S331, the user who uses the information processing system 100 selects the one-touch button registered in step S318, and the CPU 231 receives the selection. At this time, a plurality of one-touch buttons may be registered. If a plurality of one-touch buttons is displayed on the display device 207, the user selects a one-touch button corresponding to desired processing. The one-touch button selected by the user is used to simultaneously give an instruction to scan an original document and give an instruction to use the AI service provided by the generative AI server 103. That is, the one-touch button is selected by the user, whereby instructions in step S332 and subsequent steps are automatically given without receiving instructions from the user, and the user can obtain an output product of the AI service. Specifically, if the one-touch button is pressed by the user, the image processing apparatus 102 scans an original document, performs image processing on image data acquired by the scanning, and transmits the image data and the instruction sentence to the generative AI server 103. Regarding the scanning of the original document, similarly to step S301, an original document such as a paper document is placed in the document conveyance device 237 of the image processing apparatus 102, and the one-touch button is pressed using the input device 239, thereby giving an instruction to scan the original document. Step S331 will be described in detail below with reference to Figs. 11A to 11C.

In step S332, similarly to step S302, the CPU 231 of the image processing apparatus 102 controls the scanner device 236 to read the original document, thereby acquiring image data of a document image based on the original document. The CPU 231 executes image processing such as OCR and handwriting detection on the acquired image data of the document image.

In step S333, the CPU 231 of the image processing apparatus 102 controls the external interface 241 to transmit the image data of the document image acquired in step S332 and the instruction sentence (the prompt) corresponding to the one-touch button selected in step S331 to the generative AI server 103. The generative AI server 103 receives the image data and the instruction sentence (the prompt).

In step S334, similarly to step S309, the CPU 261 of the generative AI server 103 controls the components to process the image data according to the instruction sentence (the prompt) received from the image processing apparatus 102 in step S333.

In step S335, the CPU 261 of the generative AI server 103 controls the external interface 269 to transmit the result of the processing performed in step S334 to the computer 101. The computer 101 receives the result of the processing.

In step S336, the CPU 201 of the computer 101 displays the result of the processing (the output result) received from the generative AI server 103 in step S335 on the display device 207. The user confirms the output result displayed on the display device 207 and confirms that a desired output result is obtained in response to the content selected using the one-touch button in step S331.

The reason why the user logs into the AI service with the same user information also through the image processing apparatus 102 in addition to the computer 101 is to use the AI service through the computer 101 and the image processing apparatus 102 in common. Specifically, the result of the processing performed by the generative AI server 103 based on the instruction sentence and the image data transmitted from the image processing apparatus 102 can be confirmed through the computer 101.

In the present invention, the CPU 261 of the generative AI server 103 performs user authentication (login) through the computer 101 and the image processing apparatus 102, thereby saving the results of the user authentication in association with user information in the storage 266. Consequently, the generative AI server 103 transmits the result of processing performed based on image data and an instruction sentence received from the image processing apparatus 102 to the computer 101 based on the information saved in the storage 266. That is, the generative AI server 103 transmits the result of the processing performed by the generative AI server 103 to the computer 101 corresponding to the image processing apparatus 102 that has transmitted the image data and the instruction sentence.

Fig. 4 is a flowchart illustrating the flow described in Fig. 3A in which a one-touch button corresponding to a scan extension function is registered. A series of processes illustrated in the flowchart in Fig. 4 is performed by each of the CPU 201 of the computer 101 and the CPU 231 of the image processing apparatus 102 loading a program code stored in the ROM or the storage into the RAM and executing the program. This processing is started according to the state where the user starts the one-touch button registration mode by pressing a button (not illustrated).

In step S401, the CPU 201 controls the external interface 208 to receive image data of a document image acquired by the image processing apparatus 102 reading an original document such as a paper document from the image processing apparatus 102.

In step S402, the CPU 201 receives user information for using the AI service provided by the generative AI server 103 through the computer 101 as an input provided by the user via the input device 206 (step S304).

In step S403, as described in steps S305 and S306, the CPU 201 causes the generative AI server 103 to perform user authentication for using the generative AI server 103 through the computer 101. Specifically, the CPU 201 controls the external interface 208 to transmit the user information received in step S402 to the generative AI server 103.

In step S404, the user inputs via the input device 206 an instruction sentence (a prompt) for indicating a content with which the user wishes to process the image data received in step S401 using the generative AI server 103. The CPU 201 receives the instruction sentence (the prompt). Specific examples of the instruction sentence (the prompt) include an instruction to perform the process of translating or summarizing text obtained by performing OCR on a character string included in the document image. Another specific example of the instruction sentence (the prompt) is an instruction to extract pixels in which handwriting is performed in the document image, and correct text obtained by performing OCR on a character string included in the document image based on a correction instruction given by the handwriting.

In step S405, the CPU 201 controls the external interface 208 to receive the result of the processing (the output result) of the generative AI server 103 in response to the instruction sentence (the prompt) input by the user in step S404. For example, the CPU 201 acquires text obtained by translating or summarizing text obtained by performing OCR on a character string included in the document image. Alternatively, the CPU 201 acquires text obtained by correcting text obtained by performing OCR on a character string included in the document image based on a correction instruction given by handwriting in the document image.

In step S406, the CPU 201 receives an input provided by the user via the input device 206, thereby determining whether the instruction sentence (the prompt) input in step S404 is appropriate. Specifically, the CPU 201 displays the output result received in step S405 on the display device 207. The user views the output result and determines whether the output result is appropriate (as expected). Then, the user inputs information regarding whether the obtained output result is appropriate via the input device 206. The CPU 201 receives the input information. If the CPU 201 receives information indicating that the obtained output result is as expected by the user, the CPU 201 determines that the instruction sentence input in step S404 is appropriate. If the CPU 201 receives information indicating that the obtained output result is not as expected by the user, the CPU 201 determines that the instruction sentence input in step S404 is not appropriate. That is, if the instruction sentence is not a result as expected by the user (NO in step S406), steps S402 and S403 are repeated while the content of the instruction sentence (the prompt) input in step S404 is changed. If the instruction sentence is the result as expected by the user (YES in step S406), the processing proceeds to step S407.

In step S407, according to an instruction given by the user, the CPU 201 registers a template for the instruction sentence (the prompt). Specifically, the CPU 201 displays a setting screen 1050 for the advanced settings of a scan extension function on the display device 207 and receives the instruction sentence (the prompt) input to the "instruction sentence to generative AI" display frame 1080 by the user. The CPU 201 registers a fixed sentence that can be fixed in the instruction sentence as a template, and stores the template in the storage 205. At this time, the CPU 201 may register the entirety of the instruction sentence as a template. For example, the CPU 201 registers "please translate text into language [] in page layout [] within number of pages [] in application format []" ([]: parameter) as a template for an instruction sentence for achieving translated document creation 1011 in Fig. 10A.

In step S408, as described in steps S314 and S315, the CPU 231 of the image processing apparatus 102 authenticates the user who uses the generative AI server 103. Specifically, the CPU 231 receives user information for using the AI service provided by the generative AI server 103 through the image processing apparatus 102 via the input device 239 and controls the external interface 241 to transmit the user information to the generative AI server 103.

In step S409, the CPU 201 changes keywords in parts of the instruction sentence (the prompt) according to an instruction given by the user and sets the parameters 1061 to 1064. Specifically, for example, the CPU 201 sets the application format parameter 1061, the number-of-pages parameter 1062, the page layout parameter 1063, and the language parameter 1064 as parameters to be used in the instruction sentence for achieving the "translated document creation" illustrated in step S405. To register keywords to be used in the parts of the instruction sentence (the prompt), the user sets the parameters 1061 to 1064 in default settings on the setting screen 1050 for the advanced settings of the scan extension function, and the CPU 231 receives the parameters 1061 to 1064. Further, the CPU 231 receives options for (the ranges of) values that can be selected as the parameters 1061 to 1064, and these options are set in advance as keywords to be used in the parts of the instruction sentence (the prompt) as illustrated in parameters 1071 to 1074.

In step S410, the CPU 201 creates a one-touch button corresponding to the template for the instruction sentence and the ranges (including the default values) of the customizable parameters that are set in steps S407 to S409. The CPU 201 places the one-touch button in a form where the one-touch button can be selected by the user in a scan extension function setting screen 1110. The CPU 201 saves the information set in steps S407 to S409 in association with the one-touch button in the storage 238 and creates the one-touch button. The instruction sentence or the parameters registered in the one-touch button may all be fixed. In this case, every time the one-touch button is selected, the same instruction sentence is transmitted.

The enabling setting 1021 is set to "enabled", whereby the scan extension function 1010 is enabled, and the one-touch button functions. The button is selected, whereby processing corresponding to the button is executed. The information associated with the one-touch button may be able to be changed through advanced settings 1022.

The setting of the registration of the one-touch button may be reflected on the image processing apparatus 102 by accessing the image processing apparatus 102 via the network 104 through the computer 101 and inputting information to a remote user interface (UI) screen.

The process of step S408 is not limited to this timing, and the order of the process of step S408 and another process may switch. The reason why the user logs into the AI service with the same user information also through the image processing apparatus 102 in addition to the computer 101 is to use the AI service through the computer 101 and the image processing apparatus 102 in common. Specifically, the result of the processing performed by the generative AI server 103 based on the instruction sentence and the image data transmitted from the image processing apparatus 102 can be confirmed through the computer 101.

In the present invention, the CPU 261 of the generative AI server 103 performs user authentication (login) through the computer 101 and the image processing apparatus 102, thereby saving the results of the user authentication in association with user information in the storage 266. Consequently, the generative AI server 103 transmits the result of processing performed based on image data and an instruction sentence received from the image processing apparatus 102 to the computer 101 based on the information saved in the storage 266. That is, the generative AI server 103 transmits the result of the processing performed by the generative AI server 103 to the computer 101 corresponding to the image processing apparatus 102 that has transmitted the image data and the instruction sentence.

A configuration may be employed in which the computer 101 accesses the image processing apparatus 102, and the computer 101 indirectly executes this processing by the user giving an instruction to the computer 101.

Fig. 5 is a flowchart illustrating an example of the processing described in Fig. 3B in which image data is processed. The description is given on the assumption that a series of processes illustrated in the flowchart in Fig. 5 is performed by the CPU 231 of the image processing apparatus 102 loading a program code stored in the ROM 232 or the storage 238 into the RAM 234 and executing the program code. This processing is started by the user selecting a registered one-touch button.

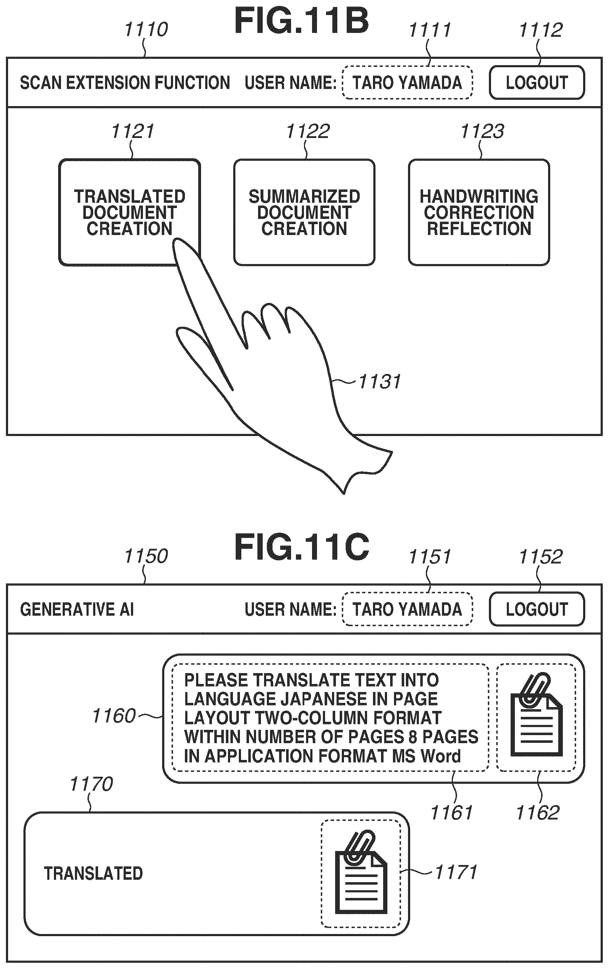

In step S501, the CPU 231 acquires the template for the instruction sentence corresponding to the one-touch button registered in step S407 from the storage 205. Specifically, for example, if a "translated document creation" one-touch button 1121 in Fig. 11B is selected by the user, the CPU 231 acquires an instruction sentence corresponding to this button that is indicated in the "instruction sentence to generative AI" display frame 1080 in Fig. 10B. If a one-touch button for summarized document creation 1012 or handwriting correction reflection 1013 is selected by the user, an instruction sentence saved corresponding to the button is displayed in the "instruction sentence to generative AI" display frame 1080, and the CPU 231 acquires the instruction sentence in this step.

The acquisition target in step S501 may not be the template for the instruction sentence corresponding to the one-touch button, and may be the default values of the parameters included in the instruction sentence. In this case, step S502 is unnecessary.

In step S502, the CPU 231 acquires the parameters to be used in the instruction sentence in the template for the instruction sentence set in step S407. For example, if the "translated document creation" one-touch button 1121 in Fig. 11B is selected by the user, the CPU 231 acquires the default values of the parameters 1071 to 1074 to be used in the instruction sentence associated with this button.

In step S503, the CPU 231 scans a paper original document 1101 in Fig. 11A using the scanner device 236, thereby acquiring image data 1102 of a document image.

In step S504, the CPU 231 executes scanned image processing on the image data 1102 acquired in step S503. Specifically, for example, the CPU 231 executes OCR on the image data 1102, thereby acquiring the language and the number of characters of text included in the document image based on the image data 1102, and detecting a pixel area of handwriting included in the document image based on the image data 1102.

In step S505, the CPU 231 acquires the template for the instruction sentence acquired in step S501 and the parameters to be used in the instruction sentence acquired in step S502 and generates an instruction sentence 1103 for indicating processing to be performed on the image data acquired in step S503. The CPU 231 generates the instruction sentence 1103 as illustrated in the "instruction sentence to generative AI" display frame 1080 in Fig. 10B, and the parameters 1071 to 1074 are reflected on the instruction sentence 1103.

In step S506, the CPU 231 controls the external interface 241 to transmit the image data 1102 acquired in step S503 and the instruction sentence 1103 generated in step S505 to the generative AI server 103 that provides the AI service. The output of the generative AI server 103 in response to the transmitted image data 1102 and instruction sentence 1103 is transmitted from the generative AI server 103 to the computer 101 and transmitted from the computer 101 to the image processing apparatus 102. Specifically, for example, as illustrated in Fig. 11C, an instruction input 1160 is provided by inputting data of the image data 1102 (an attached image 1162) and the instruction sentence 1103 (an instruction sentence 1161) as a pair, thereby obtaining an output result 1171 of the AI service. A configuration may be employed in which the image processing apparatus 102 directly receives the output of the generative AI server 103 from the generative AI server 103. A configuration may be employed in which the image processing apparatus 102 does not receive the output of the generative AI server 103.

Figs. 10A and 10B are diagrams illustrating examples of setting screens for setting a scan extension function. A scan extension function menu screen 1000 and a setting screen 1050 for the advanced settings of a scan extension function are examples of a setting reception screen displayed on the display device 240 of the image processing apparatus 102 by the CPU 231. These screens may be displayed on the display device 207 of the computer 101 by the CPU 201.

Fig. 10A is a diagram illustrating an example of a screen for setting a scan extension function. On the scan extension function menu screen 1000, the user sets a function that the user wishes to use as a one-touch button to "enabled" by an operation input 1030 as an example of a selection operation of the user, thereby setting the state where the one-touch button corresponding to the scan extension function can be used through the image processing apparatus 102. Conversely, the user sets the function to "disabled", thereby setting the state where the one-touch button corresponding to the scan extension function cannot be used through the image processing apparatus 102.

Specifically, for example, as settings 1020 for each of translated document creation 1011, summarized document creation 1012, and handwriting correction reflection 1013 as a scan extension function 1010, an enabling setting 1021 for setting "enabled" or "disabled" and advanced settings 1022 when the function is enabled are made.

If the advanced settings 1022 are selected, the scan extension function menu screen 1000 transitions to the setting screen 1050 for the advanced settings of the scan extension function.

For example, the scan extension function menu screen 1000 includes a return button 1040 and an OK button 1041. If the return button 1040 is pressed, the scan extension function menu screen 1000 returns to the previous screen without reflecting changes in the scan extension function menu screen 1000. If the OK button 1041 is pressed, the content set at this time is saved.

If the enabling setting 1021 is set to "enabled", a one-touch button corresponding to the scan extension function 1010 set to "enabled" is displayed on a scan extension function setting screen 1110. If, on the other hand, the enabling setting 1021 is set to "disabled", a one-touch button corresponding to the scan extension function 1010 set to "disabled" is not displayed on the scan extension function setting screen 1110. Even if the enabling setting 1021 is set to "disabled", a one-touch button corresponding to the scan extension function 1010 may be displayed on the scan extension function setting screen 1110, and the one-touch button may be displayed differently in color and/or shape from a one-touch button corresponding to a function set to "enabled". A configuration may be employed in which even if the one-touch button corresponding to the function set to "disabled" is displayed similarly to the one-touch button corresponding to the function set to "enabled", a warning is issued by an error message or a sound according to the selection of the user, or a configuration may be employed in which even if the one-touch button corresponding to the function set to "disabled" is selected, the one-touch button does not respond.

Fig. 10B is a diagram illustrating an example of a screen for inputting the advanced settings of the scan extension function. The setting screen 1050 for the advanced settings of the scan extension function illustrated in Fig. 10B is displayed by performing screen transition according to the operation input 1030 to the advanced settings 1022 of the translated document creation 1011 in Fig. 10A. That is, the setting screen 1050 for the advanced settings of the scan extension function is displayed on the display device 240 by the user selecting the advanced settings 1022 on the scan extension function menu screen 1000. Fig. 10B illustrates an example of a screen displayed by selecting the advanced settings 1022 corresponding to the translated document creation 1011. If the advanced settings 1022 corresponding to the summarized document creation 1012 or the handwriting correction reflection 1013 are selected, a setting screen corresponding to each function is displayed.

The setting screen 1050 for the advanced settings of the scan extension function includes an "instruction sentence to generative AI" display frame 1080, and default values 1071 to 1074 can be set for parameters 1061 to 1064, respectively. By setting the default values 1071 to 1074 corresponding to the parameters 1061 to 1064, the user can register standard settings for causing the generative AI server 103 to perform processing using the one-touch button in advance.

The application format parameter 1061 is a parameter for specifying an application or an extension when an output is provided. "MS Word" illustrated as an example specifies an output using Word software (the extension ".doc" or ".docx") provided by Microsoft Corporation.

Alternatively, "text" that specifies the extension ".txt" and "Pages" (software provided by Apple Inc.) can also be selected.

The number-of-pages parameter 1062 is a parameter for specifying the number of pages when an output is provided. "8 pages" illustrated as an example specifies that an output product is within eight pages.

The number of pages may be an item that specifies not only a maximum value but also a minimum value.

The page layout parameter 1063 is a parameter for specifying the page layout of the output product. In addition to "two-column format" illustrated as an example, a layout that can be achieved by the specified application, such as "three-column format" or "narrow first column", can be specified.

The language parameter 1064 is a parameter for specifying the language of the output product. In addition to "Japanese" illustrated as an example, various languages corresponding to the processing of the generative AI server 103 can be selected. An "Automatic" language parameter may be selected, in which the language setting of the computer 101 or the image processing apparatus 102 may be acquired, and a language according to the acquired language setting may be specified.

The parameters that can be set by the user are not limited to these.

The parameters that can be set by the user vary depending on the scan extension function 1010. For example, a configuration may be employed in which in the case of the summarized document creation 1012, the number of characters can be specified. A configuration may be employed in which in the case of the handwriting correction reflection 1013, the color of a corrected portion can be specified. On the setting screen 1050 for the advanced settings of the scan extension function, the user can set all kinds of parameters. The parameters that can be set by the user can be customized by the user.

The "instruction sentence to generative AI" display frame 1080 can be corrected and changed by the user giving an input instruction 1031. Specifically, if the user gives the input instruction 1031, the "instruction sentence to generative AI" display frame 1080 enters the state where text displayed in the "instruction sentence to generative AI" display frame 1080 can be edited. Then, the user can edit the text using the input device 239. For example, as an instruction sentence for achieving the translated document creation 1011, the user can edit, delete, or add an instruction sentence "please translate text into language [] in page layout [] within number of pages [] in application format []".

For example, the setting screen 1050 for the advanced settings of the scan extension function includes a return button 1090 and an OK button 1091. If the return button 1090 is pressed, the setting screen 1050 for the advanced settings of the scan extension function returns to the previous screen without reflecting changes in the setting screen 1050 for the advanced settings of the scan extension function. If the OK button 1091 is pressed, the content set at this time is saved.

Figs. 11A to 11C are diagrams illustrating examples of the data flow in which image data is processed and screens.

Fig. 11A is a diagram illustrating the data flow in which image data is processed. The CPU 231 of the image processing apparatus 102 according to the present invention scans a paper original document 1101 placed on the document platen of the document conveyance device 237 by the user and transmits image data 1102 and an instruction sentence 1103 that are generated (acquired) to the generative AI server 103. The output result of the generative AI server 103 can be received by the computer 101. As illustrated in steps S305, S306, S315, and S316 in Figs. 3A and 3B, since the user to use the AI service provided by the generative AI server 103 through each device is authenticated, it is possible to refer to data of the user, regardless of which device the user operates. Specifically, the user can refer to an output product of the generative AI server 103 both by operating the computer 101 and by operating the image processing apparatus 102.

Fig. 11B is a diagram illustrating an example of an operation screen displayed on the display device 240 of the image processing apparatus 102. The user selects each one-touch button on the scan extension function setting screen 1110 displayed on the touch panel screen of the image processing apparatus 102 and thereby can give an instruction to execute processing corresponding to the one-touch button. The CPU 231 receives an instruction input 1131 provided by the user via the input device 239 (the touch panel).

The scan extension function setting screen 1110 displays a "translated document creation" one-touch button 1121, a "summarized document creation" one-touch button 1122, and a "handwriting correction reflection" one-touch button 1123 corresponding to the scan extension functions 1011 to 1013 registered by the user.

The user selects each one-touch button displayed on the scan extension function setting screen 1110 and thereby can input an execution instruction. If a one-touch button corresponding to a scan extension function is not registered, the one-touch button corresponding to the scan extension function is not displayed on the scan extension function setting screen 1110. A one-touch button corresponding to a scan extension function set to "disabled" on the scan extension function menu screen 1000 is not displayed on the scan extension function setting screen 1110, either. It is not essential that if a one-touch button is not registered or if a scan extension function is set to "disabled", the one-touch button is not displayed. A configuration may be employed in which the one-touch button is displayed by changing the color and/or the shape of the one-touch button so that the user can recognize the one-touch button. A configuration may be employed in which even if the one-touch button is displayed similarly to a one-touch button corresponding to a function set to "enabled", a warning is issued by an error message and/or a sound according to the selection of the user, or a configuration may be employed in which even if the one-touch button is selected, the one-touch button does not respond.

The user who uses the generative AI server 103 through the image processing apparatus 102 uses the service provided by the generative AI server 103 as the user authenticated by the user authentication in steps S314 to S316. User information 1111 regarding the user who uses the generative AI server 103 may be saved and managed in association with the user information regarding the logged-in user of the image processing apparatus 102 in the storage 238. The CPU 231 of the image processing apparatus 102 detects that a logout button 1112 is pressed, thereby ending the reception of the instruction input 1131 provided by the logged-in user.

Fig. 11C is a diagram illustrating an AI service screen 1150 as an example of a screen displayed on the display device 207 when the AI service provided by the generative AI server 103 is used through the computer 101. The AI service screen 1150 may be displayed on the display device 240 of the image processing apparatus 102 by the CPU 231. The AI service screen 1150 for the AI service provided by the generative AI server 103 displays a response (an output result 1170) from the generative AI to an instruction input 1160 provided by the user. The "instruction input 1160 provided by the user" refers to the instruction sentence (the prompt) generated by the CPU 231 of the image processing apparatus 102 in step S505 and transmitted to the generative AI server 103 in step S506.

Fig. 11C illustrates the state where on the AI service screen 1150, an instruction sentence 1161 (the instruction sentence 1103) that is an instruction input provided by the user is automatically input, and the image data 1102 (an attached image 1162) is automatically attached to the instruction sentence 1103 and transmitted.

The user who uses the AI service provided by the generative AI server 103 through the computer 101 uses the AI service as the user authenticated by the user authentication in steps S304 to S306. User information 1151 regarding the user who uses the generative AI server 103 may be saved and managed in association with the user information regarding the logged-in user of the computer 101 in the storage 205. The CPU 201 of the computer 101 detects that a logout button 1152 is pressed, thereby ending the reception of an instruction input provided by the logged-in user corresponding to the user information 1151.

Fig. 11B illustrates an example of the operation screen that displays a list of one-touch buttons corresponding to registered scan extension functions. Alternatively, a configuration may be employed in which a different screen is used so long as the CPU 231 is configured to receive an operation input in accordance with the present invention. For example, a configuration may be employed in which an operation input provided by the user is received by transmitting the operation input to the generative AI server 103 that has already authenticated the user on a conventional operation screen obtained by extending a send function for transmitting a scanned image by email. Alternatively, a one-touch button may be displayed on a menu screen or a setting screen for a copying process executed by the image processing apparatus 102, or may be a physical button that enables the customization of a function included in the image processing apparatus 102. A one-touch button may be displayed overlapping a screen by a particular operation, or may be called by inputting a voice command.

As described above, according to the present invention, image data acquired by scanning an original document and text (an instruction sentence) based on an instruction given by the user are transmitted to an AI service, whereby the AI service can output the result of performing processing according to the intention of the user, and the user can receive the output result.

Generative AI (an AI service) is a general term for services that use AI. For example, generative AI may include ChatGPT (an artificial intelligence chat bot) provided by OpenAI, Inc., or a text generative AI service such as Copilot provided by Microsoft Corporation. For example, generative AI may include an image generative AI service such as Stable Diffusion or Midjourney.

Generative AI refers to AI capable of generating various contents and refers to AI for the purpose of learning (deep-learning) the pattern of data and the relationship between data and generating a new content.

In the present invention, in a case where an AI service is caused to execute a translated document creation process or a summarized document creation process, the image processing apparatus 102 may transmit text obtained as a result of performing OCR on image data, instead of the image data, to the generative AI server 103.

In the first exemplary embodiment, a description has been given of a method for acquiring image data of a document image from a paper original document according to an instruction input to a one-touch button registered in the image processing apparatus 102, generating an instruction sentence based on set parameters, and transmitting the image data and the instruction sentence to the generative AI server 103. In a second exemplary embodiment, a description is given of a method for, before the image processing apparatus 102 transmits image data and an instruction sentence to the generative AI server 103, detecting an error that occurs in the generative AI server 103 based on the result of image processing executed by the image processing apparatus 102, and notifying the user of the error.

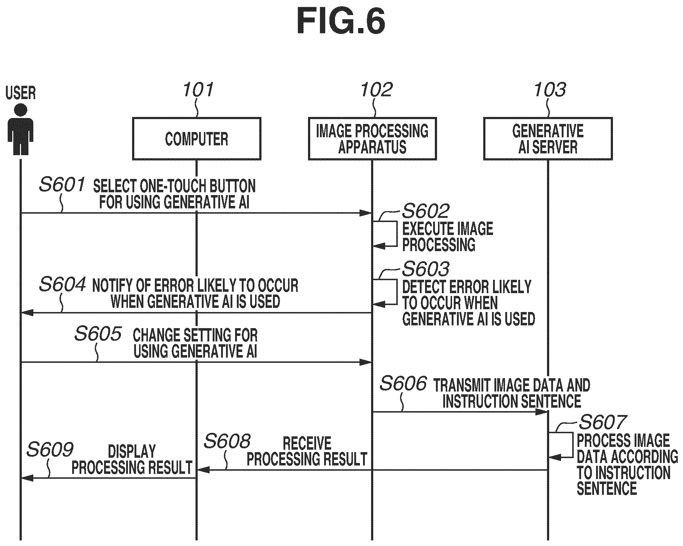

Fig. 6 is a diagram illustrating the sequence of the information processing system 100 according to the second exemplary embodiment. Among steps in the sequence illustrated in Fig. 6, steps common to Figs. 3B and 6 are similar to the first exemplary embodiment, and therefore are not described.

Steps S601 and S602 are similar to steps S331 and S332, and therefore are not described.

In step S603, the CPU 231 of the image processing apparatus 102 detects whether the instruction sentence corresponding to the one-touch button selected in step S601 and the image data of the document image acquired in step S602 are data satisfying a precondition when the AI service is used. That is, the CPU 231 confirms whether an error is likely to occur when the AI service performs processing. For example, in a case where the "translated document creation" one-touch button 1121 is selected, the CPU 231 compares the language of text included in the document image as the OCR result and the language of the translation destination set in the instruction sentence. If the languages are the same language, the CPU 231 detects that an error where translation cannot be executed is likely to occur. In a case where the "summarized document creation" one-touch button 1122 is selected, the CPU 231 compares the number of characters of the text included in the document image and the number of characters after summarization set in the instruction sentence. If the first number of characters (i.e. the number of characters included in the document image) is smaller than the second number of characters (i.e. the number of characters included in the summary), the CPU 231 detects that an error where summarization cannot be executed is likely to occur. In a case where the "handwriting correction reflection" one-touch button 1123 is selected, and if pixels in which handwriting is performed in the document image are not extracted as a result of the image processing, the CPU 231 detects that an error where the correction of handwriting cannot be reflected is likely to occur.

In step S604, the CPU 231 of the image processing apparatus 102 notifies the user of the content of the error detected in step S603. That is, the CPU 231 notifies the user that there is a possibility that the error occurs when the generative AI provides an input in the translated document creation function, the summarized document creation function, or the handwriting correction reflection function illustrated in step S603. Specifically, the CPU 231 displays on the display device 240 a message notifying the user that there is a possibility that the error occurs when the generative AI provides an input.

In step S605, the user changes the setting of a part of the instruction sentence corresponding to the one-touch button to correct the setting, taking into account the content of the error of which the user is notified in step S604. The CPU 231 receives the changed setting. Specifically, for example, in the translated document creation function, the user changes the language of the translation destination. In the summarized document creation function, the user changes information regarding the number of characters corresponding to the number of pages after summarization. In the handwriting correction reflection function, the user reconfirms that handwriting is included in the document image acquired in step S602, and changes the document image that does not include handwriting to the document image that includes handwriting.

Steps S606 to S609 are similar to steps S333 to S336, and therefore are not described.

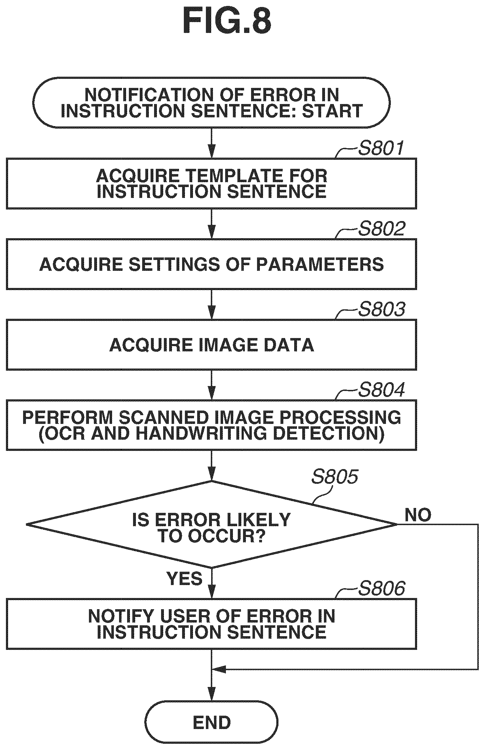

Fig. 8 is a flowchart illustrating the flow of a notification of an error in an instruction sentence according to the second exemplary embodiment. Among steps in the flowchart illustrated in Fig. 8, steps common to Figs. 5 and 8 are similar to the first exemplary embodiment, and therefore are not described. A series of processes illustrated in the flowchart in Fig. 8 is performed by the CPU 231 of the image processing apparatus 102 loading a program code stored in the ROM 232 or the storage 238 into the RAM 234 and executing the program. This processing is started by the user selecting a registered one-touch button.

Steps S801 to S804 are similar to steps S501 to S504, and therefore are not described.

In step S805, the CPU 231 detects whether the instruction sentence corresponding to the one-touch button selected in step S801 and the image data of the document image acquired in step S803 are data satisfying a precondition when the AI service is used. That is, the CPU 231 determines whether an error is likely to occur when the AI service performs processing. For example, in a case where the "translated document creation" one-touch button 1121 is selected, the CPU 231 compares the language of text included in the document image as the OCR result and the language of the translation destination set in the instruction sentence. If the languages are the same language, the CPU 231 detects that an error where translation cannot be executed is likely to occur. In a case where the "summarized document creation" one-touch button 1122 is selected, the CPU 231 compares the number of characters of the text included in the document image and the number of characters after summarization set in the instruction sentence. If the first number of characters is smaller than the second number of characters, the CPU 231 detects that an error where summarization cannot be executed is likely to occur. In a case where the "handwriting correction reflection" one-touch button 1123 is selected, and if pixels in which handwriting is performed in the document image are not extracted as a result of the image processing, the CPU 231 detects that an error where the correction of handwriting cannot be reflected is likely to occur.

If the CPU 231 determines that an error is likely to occur when the generative AI is used (YES in step S805), the processing proceeds to step S806. If the CPU 231 does not determine that an error is likely to occur when the generative AI is used (NO in step S805), the processing ends. That is, if the CPU 231 determines that an error is likely to occur when the generative AI is used, the CPU 231 determines that the CPU 231 is to notify the user of the error. Then, the processing proceeds to step S806.

In step S806, the CPU 231 notifies the user of the content of the error detected in step S805. That is, the CPU 231 notifies the user that there is a possibility that the error occurs when the generative AI provides an input in the translated document creation function, the summarized document creation function, or the handwriting correction reflection function illustrated in step S805. Specifically, the CPU 231 displays on the display device 240 a message notifying the user that there is a possibility that the error occurs when the generative AI provides an input.

As described above, according to the present exemplary embodiment, before the image processing apparatus 102 transmits image data and an instruction sentence to the generative AI server 103, the image processing apparatus 102 can detect an error that occurs in the generative AI server 103 based on the result of image processing executed by the image processing apparatus 102, and notify the user of the error.

In a third exemplary embodiment, a description is given of a method for, before the image processing apparatus 102 transmits image data and an instruction sentence, controlling or recommending a parameter for generating an instruction sentence to be transmitted to the generative AI server 103 based on the result of image processing executed by the image processing apparatus 102. The control refers to processing in which the CPU 231 of the image processing apparatus 102 changes a parameter and limits a parameter that can be selected by the user. The recommendation refers to processing in which the CPU 231 of the image processing apparatus 102 performs display that urges the user to change a parameter, and displays candidates for the parameter at higher ranks when the candidates are displayed.

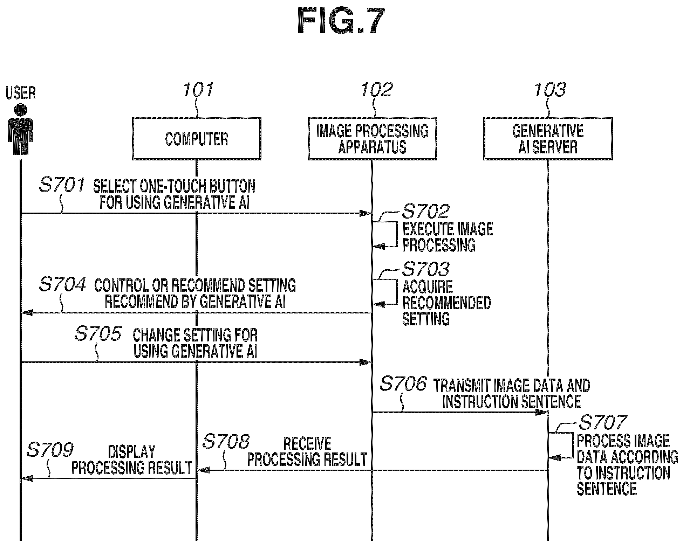

Fig. 7 is a diagram illustrating the sequence of the information processing system 100 according to the third exemplary embodiment. Among steps in the sequence illustrated in Fig. 7, steps common to Figs. 3B and 7 are similar to the first exemplary embodiment, and therefore are not described.

Steps S701 and S702 are similar to steps S331 and S332, and therefore are not described.

In step S703, based on the result of the image processing on the image data acquired in step S702, the CPU 231 of the image processing apparatus 102 acquires a setting recommended as the instruction sentence to be used in the one-touch button selected in step S701. Specifically, for example, in the case of the translated document creation function, the CPU 231 acquires a setting range recommended as the language parameter based on the language set in the image processing apparatus 102. For example, if the main body of the image processing apparatus 102 is set to Japanese, "Japanese" is acquired. In the case of the summarized document creation function, the CPU 231 acquires a setting range recommended as the number-of-pages parameter based on the number of characters of text included in the document image obtained by performing OCR on the image data. For example, if the text included in the document image includes 3000 characters, "3 pages" is acquired. In the handwriting correction reflection function, the CPU 231 acquires a recommended setting such as an instruction based on handwritten characters, a handwritten framed circle as a processing target range, or pixels (noise) erroneously detected as handwriting, based on a handwritten object or the number of pixels as a result of handwriting detection.

The recommended setting range can be set in advance by the user. The process of step S703 is executed with reference to the recommended setting range saved in the storage 238.

The recommended setting range may differ with respect to each scan extension function.

In step S704, based on the setting acquired in step S703, the CPU 231 of the image processing apparatus 102 controls the range that can be selected as the parameter for the instruction sentence to be used in the one-touch button selected in step S701, or recommends the recommended setting. Specifically, for example, in the translated document creation function, based on the acquisition of the language setting of the image processing apparatus 102 in step S703, the CPU 231 controls the acquired language as the language parameter. In the summarized document creation function, the CPU 231 performs control so that the number-of-pages parameter can be selected in the range where the number-of-pages parameter is less than or equal to the net number of pages of a character string as the OCR result. In the handwriting correction reflection function, the CPU 231 performs control based on any of an instruction based on handwritten characters, a handwritten framed circle as a processing target range, and pixels (noise) erroneously detected as handwriting.

Based on the result of the image processing, the CPU 231 performs control to limit the options or the selection range in the instruction sentence that can be set by the user. Alternatively, the options or the selection range may be displayed as a recommended setting to the user, and a setting itself may be made according to selection based on the determination of the user.

In step S705, the user changes the setting of a part of the instruction sentence corresponding to the one-touch button to correct the setting, taking into account the setting range controlled or the setting recommended in step S704. The CPU 231 receives the changed setting. Specifically, for example, in the translated document creation function, the user changes the language of the translation destination. In the summarized document creation function, the user changes the number of pages after summarization to a value smaller than the net number of pages of a character string as the OCR result. In the handwriting correction reflection function, the user changes the instruction sentence so that a handwritten framed circle can be interpreted as a processing target range. The change in the setting made by the user is not essential. If the user does not need to change the setting, the user may not change the setting to the controlled setting range or the recommended setting.

Steps S706 to S709 are similar to steps S333 to S336, and therefore are not described.

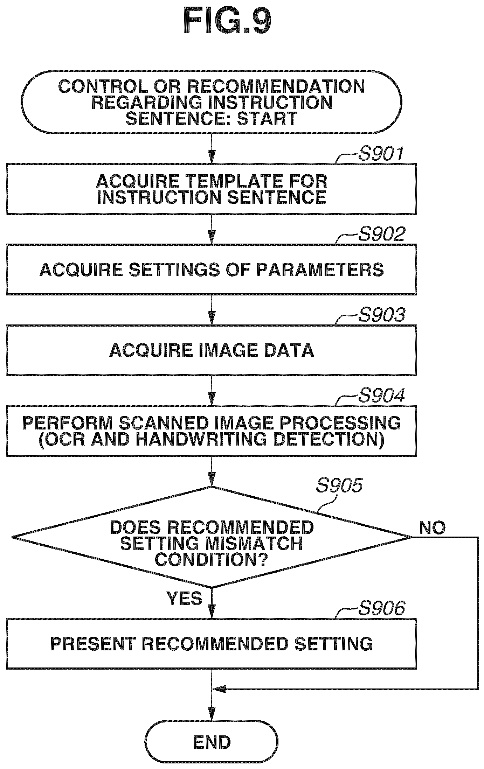

Fig. 9 is a flowchart illustrating the flow of control of the setting of an instruction sentence according to the third exemplary embodiment. Among steps in the flowchart illustrated in Fig. 9, steps common to Figs. 5 and 9 are similar to the first exemplary embodiment, and therefore are not described. A series of processes illustrated in the flowchart in Fig. 9 is performed by the CPU 231 of the image processing apparatus 102 loading a program code stored in the ROM 232 or the storage 238 into the RAM 234 and executing the program. This processing is started by the user selecting a registered one-touch button.

Steps S901 to S904 are similar to steps S501 to S504, and therefore are not described.

In step S905, based on the result of the image processing on the image data acquired in step S903, the CPU 231 acquires a setting recommended as the instruction sentence to be used in the one-touch button selected in step S901. Specifically, for example, in the case of the translated document creation function, the CPU 231 acquires a setting range recommended as the language parameter based on the language set in the image processing apparatus 102. For example, if the main body of the image processing apparatus 102 is set to Japanese, "Japanese" is acquired.

In the case of the summarized document creation function, the CPU 231 acquires a setting range recommended as the number-of-pages parameter based on the number of characters of text included in the document image obtained by performing OCR on the image data. In the handwriting correction reflection function, the CPU 231 acquires a recommended setting such as an instruction based on handwritten characters, a handwritten framed circle as a processing target range, or pixels (noise) erroneously detected as handwriting, based on a handwritten object or the number of pixels as a result of handwriting detection. If the recommended setting mismatches the condition when the generative AI is used (YES in step S905), the processing proceeds to step S906. If the recommended setting does not mismatch the condition when the generative AI is used (NO in step S905), the processing ends.

In step S906, based on the setting acquired in step S905, the CPU 231 controls the range that can be selected as the parameter for the instruction sentence to be used in the one-touch button selected in step S901, or recommends the recommended setting. Specifically, for example, in the translated document creation function, based on the acquisition of the language setting of the image processing apparatus 102 in step S902, the CPU 231 controls the acquired language as the language parameter. In the summarized document creation function, the CPU 231 performs control so that the number-of-pages parameter can be selected in the range where the number-of-pages parameter is less than or equal to the net number of pages of a character string as the OCR result. In the handwriting correction reflection function, based on the result of detecting handwriting as the result of the image processing, the CPU 231 performs control based on any of an instruction based on handwritten characters, a handwritten framed circle as a processing target range, and pixels (noise) erroneously detected as handwriting.

Based on the result of the image processing, the CPU 231 performs control to limit the options or the selection range in the instruction sentence that can be set by the user. Alternatively, the options or the selection ranges may be displayed as a recommended setting to the user, and a setting itself may be made according to selection based on the determination of the user.

As described above, according to the present exemplary embodiment, before the image processing apparatus 102 transmits image data and an instruction sentence to the generative AI server 103, the image processing apparatus 102 can control or recommend an instruction sentence to be transmitted to the generative AI server 103 based on the result of executed image processing.

In a fourth exemplary embodiment, a description is given of a method for, before the image processing apparatus 102 transmits image data and an instruction sentence to the generative AI server 103, recommending a parameter for generating an instruction sentence to be transmitted to the generative AI server 103 using user information (e.g., an attribute or usage history). That is, the image processing apparatus 102 according to the present exemplary embodiment acquires user information.

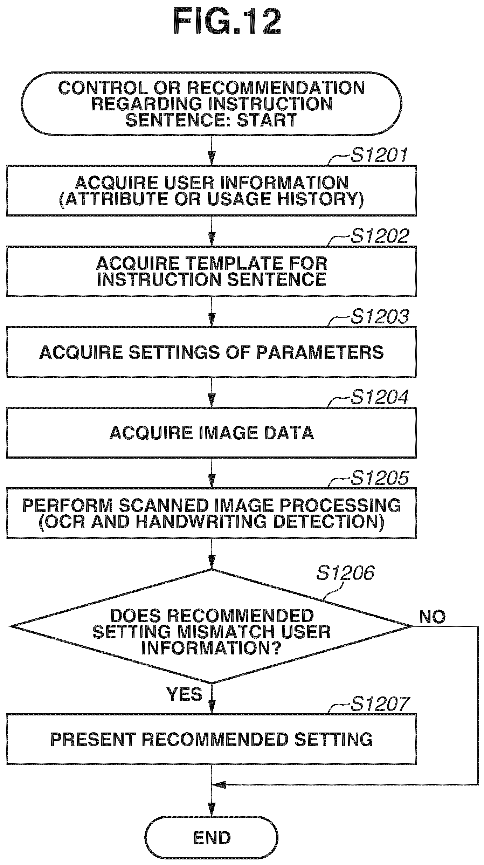

Fig. 12 is a flowchart illustrating the flow of control of the setting of an instruction sentence according to the fourth exemplary embodiment. Among steps in the flowchart illustrated in Fig. 12, steps common to Figs. 9 and 12 are similar to the third exemplary embodiment, and therefore are not described. A series of processes illustrated in the flowchart in Fig. 12 is performed by the CPU 231 of the image processing apparatus 102 loading a program code stored in the ROM 232 or the storage 238 into the RAM 234 and executing the program. This processing is started by the user selecting a registered one-touch button.

In step S1201, the CPU 231 acquires the attribute or the usage history of the user as user information. For example, the attribute of the user is information regarding a language mainly used by the user. The usage history of the user is information regarding application software most recently used as the destination of the processing on image data by a scan extension function, or frequently used application software. The CPU 231 acquires the attribute or the usage history of the user.

Steps S1202 to S1205 are similar to steps S901 to S904, and therefore are not described.

In step S1206, the CPU 231 acquires a recommended setting using the user information acquired in step S1201. Specifically, for example, the CPU 231 compares the language of text included in the document image acquired by performing OCR on the image data and the language mainly used by the user. The CPU 231 compares the application set in the application format parameter 1061 and the application obtained from the usage history of the user. If the recommended setting mismatches the user information (YES in step S 1206), the processing proceeds to step S1207. If the recommended setting does not mismatch the user information (NO in step S1206), the processing ends.

In step S1207, according to the result of step S1206, the CPU 231 displays the recommended setting to the user. Specifically, for example, the CPU 231 displays the recommended setting so that the instruction sentence gives an instruction to translate the language of the text into the language mainly used by the user. For example, the CPU 231 displays the recommended setting so that the instruction sentence gives an instruction to convert the set application into the application obtained from the usage history (most recently used or frequently used) of the user.

As described above, according to the present exemplary embodiment, before the image processing apparatus 102 transmits image data and an instruction to the generative AI server 103, the image processing apparatus 102 can recommend an instruction sentence to be transmitted to the generative AI server 103 based on the result of image processing and user information.

In a variation, an example is described where the information processing system 100 includes the image processing apparatus 102 and the generative AI server 103. That is, the user scans an original document using the image processing apparatus 102, the processing is performed not via the computer 101, and the user confirms the final output result of the generative AI server 103 using the image processing apparatus 102. The sequence in a case where the processing is performed in this configuration is described focusing on the user and the apparatuses that perform the processing regarding the processes of steps S331 to S336 described in Fig. 3B.

In step S331, the user who uses the information processing system 100 selects the one-touch button registered in step S318.

In step S332, the CPU 231 of the image processing apparatus 102 controls the scanner device 236 to read an original document, thereby acquiring image data of a document image based on the original document. The CPU 231 executes image processing such as OCR and handwriting detection on the acquired image data.

In step S333, the CPU 231 of the image processing apparatus 102 controls the external interface 241 to transmit the image data acquired in step S332 and the instruction sentence (the prompt) corresponding to the one-touch button selected in step S331 to the generative AI server 103. The generative AI server 103 receives the image data and the instruction sentence (the prompt).

In step S334, the CPU 261 of the generative AI server 103 controls the components to process the image data according to the instruction sentence (the prompt) received from the image processing apparatus 102 in step S333.

In step S335, the CPU 261 of the generative AI server 103 controls the external interface 269 to transmit the result of the processing (the output result) performed in step S334 to the image processing apparatus 102. The image processing apparatus 102 receives the result of the processing (the output result).

In step S336, the CPU 231 of the image processing apparatus 102 displays the output result received from the generative AI server 103 in step S335 on the display device 240. The user confirms the output result displayed on the display device 240 and confirms that a desired output result is obtained in response to the content selected using the one-touch button in step S331.

The present invention can also be achieved by the process of supplying a program for achieving one or more functions of the above exemplary embodiments to a system or an apparatus via a network or a storage medium, and of causing one or more processors of a computer of the system or the apparatus to read and execute the program. The present invention can also be achieved by a circuit (e.g., an ASIC) for achieving the one or more functions.

### Other Embodiments

Embodiment(s) of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to exemplary embodiments, it is to be understood that the invention is not limited to the disclosed exemplary embodiments. The scope of the following claims is to be accorded the broadest interpretation so as to encompass all and equivalent structures and functions.

## Claims

1. An image processing apparatus comprising:
receiving means for receiving selection of a button from a user;
acquisition means for acquiring image data by reading an original document according to reception of the selection by the receiving means; and
transmission means for transmitting an instruction sentence registered in association with the button by the user and to be used for processing that is performed using the image data by an artificial intelligence (AI) service, and the image data, to the AI service.

2. The image processing apparatus according to claim 1, further comprising setting receiving means for receiving a setting of the processing that is executed by the AI service from the user,
wherein the transmission means transmits an instruction sentence registered in association with the button based on the setting received by the setting receiving means, and the image data, to the AI service.

3. The image processing apparatus according to claim 1, further comprising instruction sentence receiving means for receiving the instruction sentence from the user,
wherein the transmission means transmits the instruction sentence registered in association with the button, and the image data, to the AI service in response to the instruction sentence receiving means receiving the instruction sentence.

4. The image processing apparatus according to claim 1, further comprising execution means for executing image processing on the image data,
wherein the execution means acquires information by executing the image processing.

5. The image processing apparatus according to claim 4, further comprising means for receiving a setting of the processing that is executed by the AI service from the user.

6. The image processing apparatus according to claim 5,
wherein the information is a number of characters included in an image indicated by the image data,
wherein the setting is a setting of the number of characters, and
wherein the image processing apparatus further comprises first determination means for, based on the number of characters based on the setting received by the means and the number of characters acquired by the execution means, determining whether to issue a notification to the user.

7. The image processing apparatus according to claim 6, further comprising first notification means,
wherein in a case where the number of characters based on the setting received by the means exceeds the number of characters acquired by the execution means, the first determination means determines that the notification is to be issued, and
wherein the first notification means issues the notification based on the determination.

8. The image processing apparatus according to claim 5,
wherein the information is information indicating a language of a character included in an image indicated by the image data,
wherein the setting is a language setting, and
wherein the image processing apparatus further comprises second determination means for, based on the language setting received by the means and information indicating a language acquired by the execution means, determining whether to issue a notification to the user.

9. The image processing apparatus according to claim 8, further comprising second notification means,
wherein in a case where a language indicated by the language setting received by the means is different from a language indicated by the information indicating the language acquired by the execution means, the second determination means determines that the notification is to be issued, and
wherein the second notification means issues the notification based on the determination.

10. The image processing apparatus according to claim 5, wherein based on the information acquired by the execution means, the means limits the setting that is received from the user.

11. The image processing apparatus according to claim 5, further comprising first information acquisition means for acquiring user information regarding a user who logs into the image processing apparatus,
wherein based on the user information regarding the user acquired by the first information acquisition means, the means limits the setting that is received from the user.

12. The image processing apparatus according to claim 11, wherein the user information is a language used by the user.

13. The image processing apparatus according to claim 11, wherein the user information is history of a function used by the user.

14. The image processing apparatus according to claim 5, further comprising second information acquisition means for acquiring user information regarding a user who logs into the image processing apparatus,
wherein based on the user information regarding the user acquired by the second information acquisition means, the means recommends a content of a setting to be made by the user.

15. The image processing apparatus according to claim 14, wherein the user information is a language used by the user and usage history of a function used by the user.

16. The image processing apparatus according to claim 1, further comprising:
display means; and
reception means for receiving a processing result from the AI service,
wherein the display means displays the processing result received by the reception means.

17. The image processing apparatus according to claim 1, wherein according to the reception of the selection by the receiving means, the acquisition means acquires image data by reading an original document, and the transmission means transmits an instruction sentence registered in association with the button by the user and to be used for processing that is performed using the image data by the AI service, and the image data, to the AI service.

18. The image processing apparatus according to claim 1, wherein the acquisition means acquires the image data by reading the original document by conveying the original document placed on a document platen.

19. A program causing a computer to execute each means of the image processing apparatus according to any one of claims 1 to 18.

20. An image processing method comprising:
receiving selection of a button from a user;
acquiring image data by reading an original document according to reception of the selection; and
transmitting an instruction sentence registered in association with the button by the user and to be used for processing that is performed using the image data by an AI service, and the image data, to the AI service.
